# EUROPÄISCHE PATENTSCHRIFT

(11) **EP 1 411 619 B1**
(45) Veröffentlichungstag und Bekanntmachung des Hinweises auf die Patenterteilung: **28.11.2018**
(21) Anmeldenummer: 02023222.9
(22) Anmeldetag: 16.10.2002
(51) Int. Cl.: H02K 5/22, H01F 27/04

(54) **Generatorableitung, insbesondere für einen Anschlussbereich im Generatorfundament**
Generator interconnection, in particular having the connection area in the generator foundation
Raccordement de générateur, notamment ayant la zone de connexion dans la fondation du générateur

(43) Veröffentlichungstag der Anmeldung: 21.04.2004
(73) Patentinhaber: Siemens Aktiengesellschaft, 80333 München (DE)
(72) Erfinder: Feuerstein, Winfried, 91058 Erlangen (DE); Schreiner, Franz, 93426 Roding (DE)

(56) Entgegenhaltungen:
- GB-A- 443 017
- GB-A- 725 211
- US-A- 2 742 582
- US-A- 4 132 853

## Beschreibung

Die vorliegende Erfindung betrifft eine Generatorableitung zur elektrischen Verbindung zwischen einem Generator und einem Transformator, und insbesondere eine derartige Generatorableitung, die in einem Anschlussbereich im Generatorfundament verwendet werden kann.

Bei den Hochstromverbindungen, den so genannten Generatorableitungen, handelt es sich um die elektrische Verbindung zwischen einer Ständerwicklung eines Generators im Inneren eines Generatorgehäuses und einem zugehörigen Maschinen- oder Blocktransformator in Kraftwerken. Der konstruktive Aufbau dieser elektrischen Verbindung ist üblicherweise einphasig isoliert, d.h. jeder der drei Stromleiter des 3-Phasen-Drehstromsystems ist in einer separaten, ebenfalls elektrisch leitenden Kapselung, einer so genannten Ableitungshülle (auch als Hüllrohr bezeichnet), in einer koaxialen Struktur angeordnet. Derartige Generatorableitungen sind zum Beispiel aus der DE 25 45 832 C2 und der DE 196 19 729 A1 bekannt. Die US 4, 132, 853 offenbart beispielsweise eine Durchführung mit einem zentralen Leiter, der einen hohlen elektrischen Leiter umfasst sowie einen Zylinder, der konzentrisch um den hohlen elektrischen Leiter angeordnet ist, so dass ein sich longitudinal erstreckender Kanal für einen Kühlmittelfluss gebildet wird. Weitere Beispiele finden sich in der US 2 742 582, der GB 443 017 und der GB 725 211.

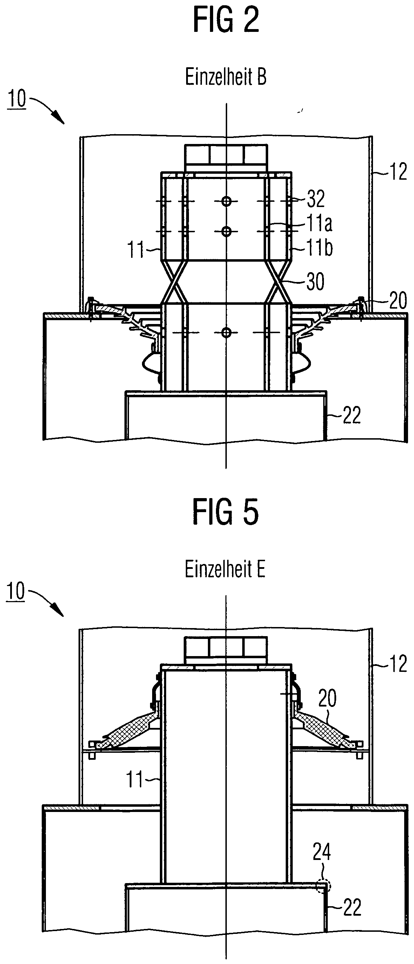

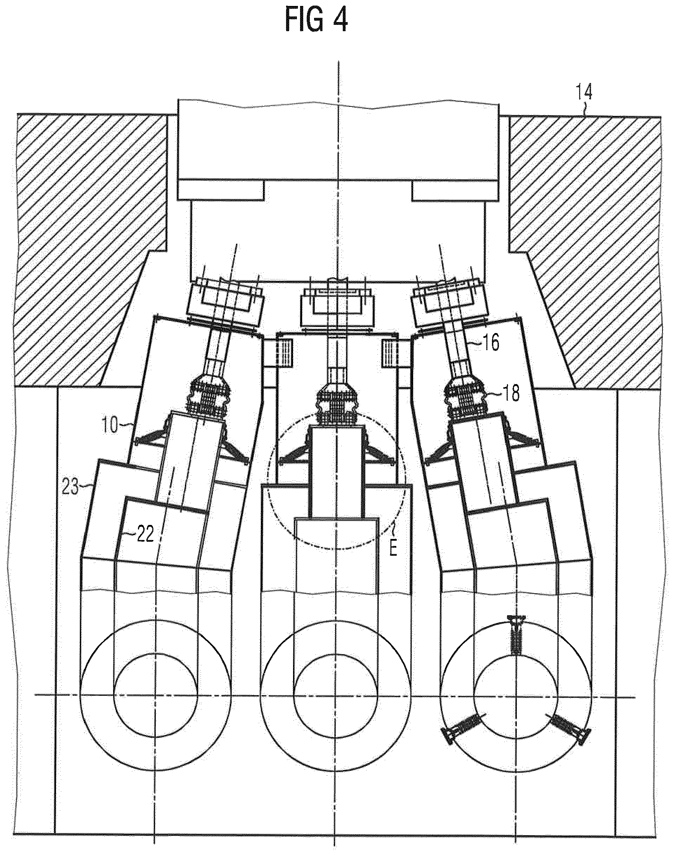

Zum besseren Verständnis der Erfindung wird an dieser Stelle zunächst anhand der Fig. 4 und 5 der Aufbau einer herkömmlichen Generatorableitung näher beschrieben. Die Generatorableitung 10 besteht im Wesentlichen aus einem zylindrischen Innenleiter 11 und einem konzentrisch zu dem Innenleiter 11 angeordneten zylindrischen Hüllrohr-Anschlussbereich 12 als Kapselung des Innenleiters. Die drei Innenleiter 11 der drei Phasen sind mit ihren zugehörigen drei isolierten Hüllrohren-Anschlußbereich 12 in einem Anschlussbereich im Generatorfundament 14 an der Unterseite eines Generators an die drei Generatordurchführungen 16 herangeführt. Zur Erhöhung der mechanischen Sicherheit gegenüber Schwingungen sind die Innenleiter 11 über flexible Dehnungsbänder 18 aus Kupfer mit den Generatordurchführungen 16 verbunden. Zu dem gleichen Zweck kann auch der Hüllrohr-Anschlussbereich 12 einen Dehnungsbalg (nicht dargestellt) aufweisen. Der Innenleiter 11 ist ferner über eine Scheibendurchführung 20 zum Beispiel aus Gießharz gegen die Innenwandung des Hüllrohres-Anschlussbereich 12 abgedichtet. Bei herkömmlichen Generatorableitungen 10 werden sowohl die zylindrischen Innenleiter 11 als auch die Hüllrohre-Anschlussbereich 12 aus Rein-Aluminium Al_{99,5} hergestellt. An die Generatorableitungen 10 schließen sich Leiterrohre 22 und Hüllrohre 23 von jeweils größerem Durchmesser als die Innenleiter 11 bzw. die Hüllrohre-Anschlussbereich 12 an.

Die elektrische Spannungsebene der Generatoren und der Generatorableitungen liegt heutzutage je nach Generatorleistung zwischen 12 und 36 kV (sog. Mittelspannungsebene). Entsprechend dieser Spannungsebene muss die Luftstrecke zwischen dem Innenleiter und dem Hüllrohr (Erdpotential) mindestens 120 bis 320 mm betragen. Zum Beispiel bei Dampfkraftwerken mit Generatorleistungen von 600 bis 900 MW und einer Generatorspannung von 21 bis 27 kV ergibt sich eine Stromstärke zwischen 18 und 25 kA sowohl im Innenleiter als auch im äußeren Hüllrohr. Infolge dieser Ströme treten Stromwärmeverluste auf, die zu einem Temperaturanstieg des Innenleiters und des Hüllrohres führen. Um die nach IEC bzw. ANSI geforderten maximal zulässigen Temperaturen von 90°C für den Innenleiter und von 70°C für das Hüllrohr einhalten zu können, müssen die Durchmesser und Wandstärken sowohl von Innenleiter als auch von Hüllrohr entsprechend dimensioniert werden.

Die räumlichen Platzverhältnisse erlauben es zumeist, die drei einphasigen Generatorableitungen in allen Spannungs- und Stromvarianten in Aluminium auszuführen und zu installieren. Lediglich bei einem Anschlussbereich in einem Generatorfundament, wie es in Fig. 4 veranschaulicht ist, werden wegen der technischen / elektrischen Anforderungen und der sehr engen Platzverhältnisse sowie des geringen Abstandes der Generatordurchführungen am Generator herkömmlicherweise Innenleiterkonstruktionen aus Kupfer eingesetzt. Diese Kupferrohre können wegen des besseren elektrischen Leitwerts gegenüber Aluminiumrohren bei geringerem Durchmesser und geringerer Wandstärke unter Einhaltung der zulässigen Temperaturen die gleichen Stromstärken übertragen.

Neben den höheren Materialkosten, der schwierigeren schweisstechnischen Handhabung und dem höheren Gewicht von Kupfer gegenüber Aluminium besteht dabei ein besonderes Problem darin, zwischen dem dünneren Innenleiter 11 aus Kupfer und dem anschließenden Leiterrohr 22 mit größerem Durchmesser aus Aluminium eine spezielle löt- und schweißtechnische elektrische schweiß-/löttechnische Verbindung 24 herzustellen. Es bestand deshalb Bedarf, insbesondere für Anschlussbereiche im Generatorfundament einfachere und preiswertere Konstruktionen von Generatorableitungen zu entwickeln.

Der Erfindung liegt deshalb die Aufgabe zugrunde, eine Generatorableitung mit einem platzsparenden und zugleich einfachen Aufbau vorzusehen, welche die elektrischen Anforderungen sowie die thermischen Grenzwerte einhält und insbesondere auch für den Einsatz in Anschlussbereichen im Generatorfundament bei vergleichsweise großen Blockleistungen von beispielsweise mehr als 18 KA geeignet ist.

Diese Aufgabe wird erfindungsgemäß dadurch gelöst, dass das innere und das äußere Leiterrohr des Innenleiters jeweils in Querrichtung getrennt und kreuzweise miteinander verbunden sind, sodass die Strombahnen in Längsrichtung des Innenleiters wenigstens einmal zwischen dem äußeren Leiterrohr und dem inneren Leiterrohr wechseln.

Die Erfindung geht dabei von der Überlegung aus, den Innenleiter anstelle aus Kupfer wieder aus dem leichteren, preiswerteren und einfacher zu verarbeitenden Aluminium zu fertigen und dennoch eine platzsparende Konstruktion zu finden. Hierzu wird in der Generatorableitung für den Innenleiter eine so genannte Doppelrohrlösung aus einem inneren Rohr und einem äußeren Rohr vorgeschlagen, deren äußere Abmessung gleich der herkömmlichen platzsparenden Lösung des früheren Innenleiters aus Kupfer ist. Mit dieser Doppelrohrlösung sollte der Gesamtstrom des Generators in etwa zwei gleiche Teile aufgeteilt werden. Bei der Übertragung von Gleichstrom durch den Innleiter werden das innere Rohr und das äußere auch tatsächlich mit jeweils etwa 50% des Gesamtstroms beaufschlagt; dies gilt jedoch nicht für die Übertragung von Wechselstrom.

Im Fall der Übertragung von Wechselstrom fließt nahezu der gesamte Strom (> 95%) im äußeren Rohr des Innenleiters. Der Grund für diesen Effekt ist der unterschiedliche Wechselstromwiderstand der beiden Rohre bzw. der bei Wechselstrom vorhandene Skineffekt. Beide konzentrischen Rohre des Innenleiters stellen elektrisch einen Rohrleiter dar, durch dessen äußeren Rohrmantel nahezu der gesamte Strom fließt. Da wegen der standardisierten Generatoranschlusskonfiguration das äußere Rohr des Innenleiters den früheren Durchmesser des Innenleiters aus Kupfer besitzt, ist wegen des schlechteren Leitwerts von Aluminium gegenüber Kupfer eine deutliche Überschreitung der zulässigen Innenleitertemperaturen zu erwarten. Allein der Aufbau eines Innenleiters mit Doppelrohrkonstruktion löst daher noch nicht die oben genannte Aufgabe.

Es ist daher angestrebt, dass in der Doppelrohrlösung für den Innenleiter in beiden Rohren des Innenleiters in etwa der gleiche Stromfluss vorherrscht. Dies wird erfindungsgemäß dadurch erzielt, dass die Strombahnen in Längsachsenrichtung des Innenleiters wenigstens einmal zwischen dem äußeren Rohr und dem inneren Rohr des Innenleiters wechseln. Durch den Wechsel der Strombahnen von innerem Rohr zu äußerem Rohr und umgekehrt kann der Wechselstromwiderstand, die elektrische Einflussgröße für die Stromaufteilung, zwischen den beiden Strombahnen und damit auch der Stromfluss zwischen den beiden Strombahnen angeglichen werden. Durch die Aufteilung des Generatorstroms auf das innere und das äußere Rohr ist es möglich, die zulässigen Temperaturgrenzwerte einzuhalten, selbst wenn für den Innenleiter statt Kupfer Aluminium verwendet wird.

Vorteilhafterweise wechseln die Strombahnen in Längsachsenrichtung des Innenleiters einmal an einer Mittelposition in Längsrichtung des Innenleiters zwischen dem äußeren Rohr und dem inneren Rohr, so dass eine Stromaufteilung in etwa zwei gleiche Teile erfolgt.

Zur Erzielung einer möglichst gleichmäßigen Stromaufteilung sollten das innere Rohr und das äußere Rohr des Innenleiters außerdem konzentrisch angeordnet sein.

Wie bereits erwähnt, eignet sich die Generatorableitung der vorliegenden Erfindung insbesondere auch für den Einsatz in einem Anschlussbereich im Generatorfundament.

Die mit der Erfindung erzielten Vorteile bestehen insbesondere darin, dass für eine platzsparende und kompakte Konstruktion einer Generatorableitung für den Innenleiter Aluminium verwendet werden kann. Die Verwendung von Aluminium bringt Kostenvorteile mit sich, da die Materialkosten niedriger und die Verarbeitung einfacher als bei Kupfer sind. Außerdem sind keine aufwändigen löt- und schweißtechnischen Verbindungen zwischen Kupfer- und Aluminiummaterial erforderlich. Das niedrigere Gewicht von Aluminium bietet ferner Vorteile beim Transport und der Handhabung vor Ort.

Ein bevorzugtes Ausführungsbeispiel der Erfindung wird anhand der beiliegenden Zeichnungen näher erläutert. Darin zeigen:

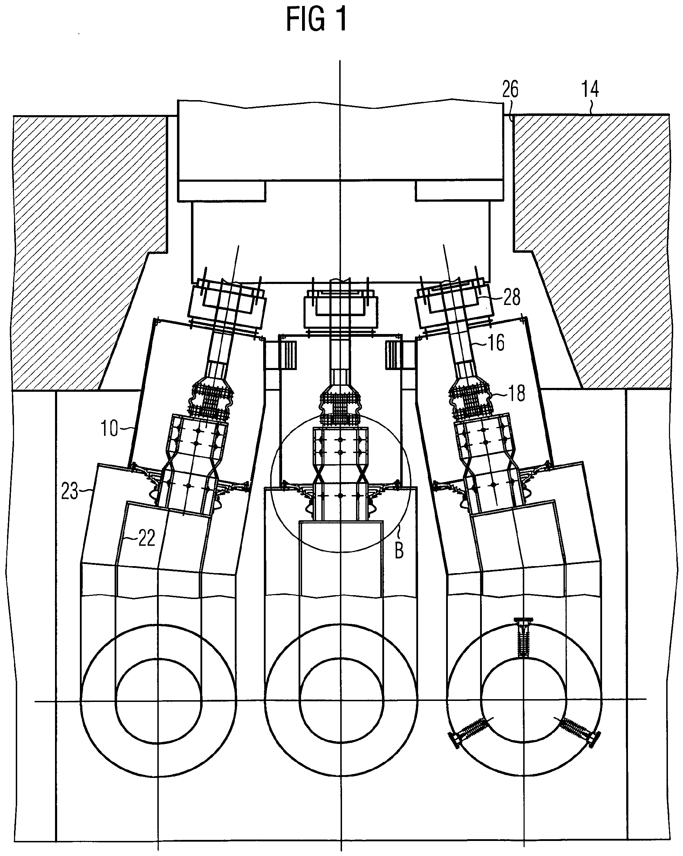

- Fig. 1: eine schematische Darstellung des Anschlusses von drei Generatorableitungen gemäß der vorliegenden Erfindung in einem Anschlussbereich im Generatorfundament;
- Fig. 2: eine vergrößerte Darstellung der Einzelheit B von Fig. 1, die den Aufbau eines bevorzugten Ausführungsbeispiels einer erfindungsgemäßen Generatorableitung zeigt;
- Fig.: 3a und b eine vergrößerte Darstellung des Innenleiters der Generatorableitung von Fig. 2 bzw. ein Ersatzschaltbild davon;
- Fig. 4: eine schematische Darstellung des Anschlusses von drei herkömmlichen Generatorableitungen in einem Anschlussbereich im Generatorfundament; und
- Fig. 5: eine vergrößerte Darstellung der Einzelheit E von Fig. 4, die den Aufbau der herkömmlichen Generatorableitung zeigt.

Es folgt eine Beschreibung eines bevorzugten Ausführungsbeispiels einer Generatorableitung gemäß der vorliegenden Erfindung, die vorteilhafterweise in einem Anschlussbereich im Generatorfundament verwendet werden kann. Der besseren Übersichtlichkeit halber werden für gleiche Bauteile bzw. Elemente die gleichen Bezugsziffern wie bei der herkömmlichen Generatorableitung von Fig. 4 und 5 verwendet.

Im Generatorfundament 14 eines Generators ist eine Generatorfundamentöffnung 26 vorgesehen, durch den die drei elektrischen Verbindungen des 3-Phasen-Drehstromsystems über Anschlussstücke 28 und Generatordurchführungen 16 aus dem Generatorgehäuse herausgeführt sind. Die Generatorableitungen 10 der drei Phasen bestehen jeweils aus einem zylindrischen Innenleiter 11 und einem konzentrisch zu dem Innenleiter 11 angeordneten Hüllrohr-Anschlussbereich 12 zur einphasigen Kapselung des Innenleiters 11. Die Innenleiter 11 sind über flexible Dehnungsbänder 18 aus Kupfer mit den Generatordurchführungen 16 verbunden, um eine mechanische Sicherheit gegenüber Schwingungen für die elektrische Verbindung zu gewährleisten. Aus dem gleichen Grund kann auch der Hüllrohr-Anschlussbereich 12 mit einem balg- oder wellrohrartigen Ausdehnungskompensator (nicht dargestellt) versehen sein.

Wie insbesondere in Fig. 2 zu erkennen, ist der Innenleiter 11 über eine Scheibendurchführung 20 aus Gießharz gegen die Innenwand des Hüllrohr-Anschlussbereichs 12 abgedichtet. Außerdem geht der Innenleiter 11 in ein Innenleiterrohr 22 mit größerem Durchmesser über, und der Hüllrohr-Anschlussbereich 12 geht in ein Hüllrohr 23 mit größerem Durchmesser über. Sowohl der Innenleiter 11 als auch der Hüllrohr-Anschlussbereich 12 sind aus Aluminium, insbesondere Rein-Aluminium Al_{99,5}, hergestellt.

Der Außendurchmesser Da des Aluminium-Innenleiters 11 der erfindungsgemäßen Generatorableitung 10 entspricht dem Außendurchmesser des Kupfer-Innenleiters der herkömmlichen Konstruktion von Fig. 4 und 5, so dass die bestehenden Konfigurationen für einphasige Generatoranschlusslösungen, d.h. die Ausführung des Generatorfundaments 14 und die kompakte Anordnung der Generatordurchführungen 16 beibehalten werden können.

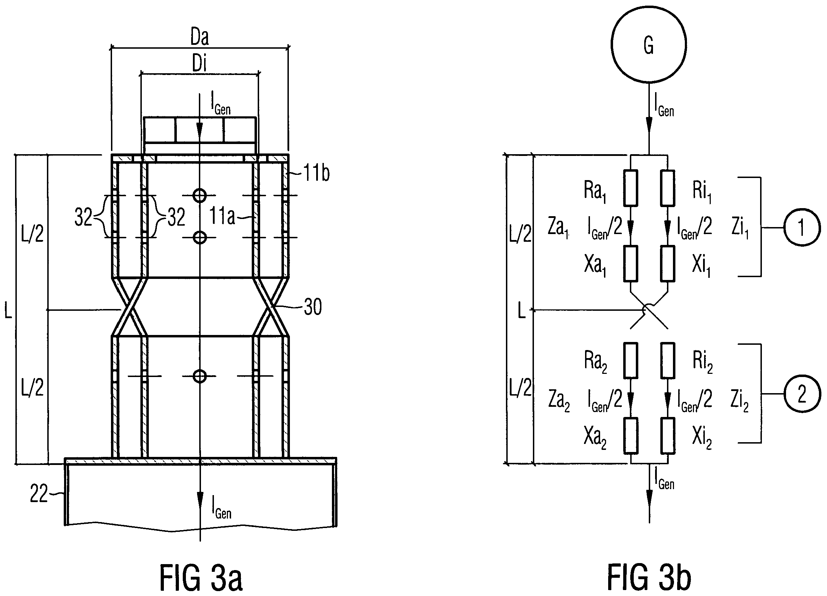

Wie in den Fig. 2 und 3a) dargestellt, ist der zylindrische Innenleiter 11 aus Aluminium als so genannte Doppelrohrkonstruktion ausgebildet, d.h. der Innenleiter 11 ist aus einem inneren Leiterrohr 11a und einem äußeren Leiterrohr 11b sowie einer kreuzweisen Verbindung 30 aufgebaut. Das innere Leiterrohr 11a und das äußere Leiterrohr 11b sind vorzugsweise konzentrisch zueinander angeordnet und sind beide aus Aluminium gefertigt. Zur Herstellung der kreuzweisen Verbindung 30 werden das innere und das äußere Leiterrohr 11a, 11b zum Beispiel in Querrichtung des Innenleiters 11 getrennt und anschließend über eine X-Verschaltung mit Flachprofilen aus Aluminium wieder schweißtechnisch verbunden.

Durch diese Doppelrohrkonstruktion des Innenleiters 11 wechseln die Strombahnen im Innenleiter 11 in Längsrichtung des Innenleiters 11 an der Stelle der kreuzweisen Verbindung 30 zwischen dem inneren Leiterrohr 11a und dem äußeren Leiterrohr 11b. Auf diese Weise wird erreicht, dass auch bei einer Wechselstromübertragung der Gesamtgeneratorstrom I_{Gen} auf das innere Leiterrohr 11a und das äußere Leiterrohr 11b aufgeteilt wird.

Um eine gleichmäßige Aufteilung des Generatorstroms I_{Gen} auf das innere Leiterrohr 11a und das äußere Leiterrohr 11b zu bewirken, sollte die kreuzweise Verbindung 30 in der Mittelposition in Längsrichtung, d.h. auf halber Länge L/2 des Innenleiters 11 angeordnet sein. Ferner sollten die Geometrien des Innenleiters 11, d.h. die Durchmesser und Wandstärken der Leiterrohre 11a und 11b im ersten und im zweiten Abschnitt gleich sein.

Es wird an dieser Stelle aber darauf hingewiesen, dass die vorliegende Erfindung nicht auf einen Wechsel der Strombahnen in der Mitte des Innenleiters 11 beschränkt ist. Es ist grundsätzlich auch möglich, mehrere Wechsel der Strombahnen zwischen innerem Leiterrohr 11a und äußerem Leiterrohr 11b vorzusehen. Zum Beispiel kann ein erster Wechsel etwa bei ¼ und ein zweiter Wechsel etwa bei ¾ der Länge des Innenleiters 11 erfolgen. Auch ist die kreuzweise Verbindung 30 nicht auf die oben angegebene Konstruktion beschränkt, sie sollte jedoch möglichst niederohmig sein.

Wie aus dem Ersatzschaltbild der Doppelrohrkonstruktion von Fig. 3b) hervorgeht, sind einerseits die induktiven Widerstände Xa des äußeren Leiterrohres 11b im ersten und im zweiten Abschnitt gleich (Xa₁=Xa₂) und die Widerstände Ra des äußeren Leiterrohres 11b im ersten und im zweiten Abschnitt gleich (Ra₁=Ra₂), und andererseits sind die induktiven Widerstände Xi des inneren Leiterrohres 11a im ersten und im zweiten Abschnitt gleich (Xi₁=Xi₂) und die Widerstände Ri des inneren Leiterrohres 11a im ersten und im zweiten Abschnitt gleich (Ri₁=Ri₂). Damit sind auch die Wechselstromwiderstände Za des äußeren Leiterrohres 11b im ersten und im zweiten Abschnitt gleich (Za₁=Za₂) sowie die Wechselstromwiderstände Zi des inneren Leiterrohres 11a im ersten und im zweiten Abschnitt gleich (Zi₁=Zi₂). Weiter setzt sich der Wechselstromwiderstand der einen Strombahn, die im ersten Abschnitt durch das äußere Leiterrohr 11b und im zweiten Abschnitt durch das innere Leiterrohr 11a führt, zusammen aus Z = Za₁ + Zi₂, und der Wechselstromwiderstand der anderen Strombahn, die im ersten Abschnitt durch das innere Leiterrohr 11a und im zweiten Abschnitt durch das äußere Leiterrohr 11b führt, setzt sich aus Z = Zi₁ + Za₂ zusammen. Mit Za₁=Za₂ und Zi₁=Zi₂ ergibt sich daher, dass die Wechselstromwiderstände Z in beiden Strombahnen gleich sind. Bei gleichen Wechselstromwiderständen Z in beiden Strombahnen muss auch in beiden Strombahnen der gleiche Strom fließen, nämlich I = I_{Gen} / 2.

Durch diese bevorzugt gleichmäßige Aufteilung des Stromflusses durch das innere Leiterrohr 11a und das äußere Leiterrohr 11b des Innenleiters 11 werden automatisch auch die Stromwärmeverluste gleichmäßig auf beide Leiterrohre 11a und 11b aufgeteilt, so dass die zulässigen Temperaturen für den Innenleiter 11 eingehalten werden können, selbst wenn für das innere und das äußere Leiterrohr 11a, 11b des Innenleiters 11 Aluminium mit einem schlechteren elektrischen Leitwert als Kupfer verwendet wird.

Wie in Fig. 2 und 3a) dargestellt, weisen das innere und das äußere Leiterrohr 11a und 11b des Innenleiters 11 ferner Lüftungsöffnungen 32 auf, um den Innenleiter 11 von außen und von innen mit Kühlluft insbesondere über natürliche Konvektion kühlen zu können.

In einem bereits in der Praxis getesteten Ausführungsbeispiel einer erfindungsgemäßen Generatorableitung 10 mit dem oben beschriebenen Aufbau beträgt zum Beispiel die Länge L des Innenleiters 11 etwa 1,0 bis 2 m, der Durchmesser des Hüllrohr-Anschlussbereichs 12 beträgt etwa 1,3 bis 1,5m, der Außendurchmesser des äußeren Leiterrohres 11b des Innenleiters 11 beträgt etwa 600 mm, und der Außendurchmesser Di des inneren Leiterrohres 11a beträgt etwa 400 mm. Die Wandstärken des inneren und des äußeren Leiterrohres 11a und 11b sind jeweils zu etwa 20 mm gewählt.

## Patentansprüche

1. Generatorableitung (10) zur elektrischen Verbindung zwischen einem Generator und einem Transformator, mit einem zylindrischen Innenleiter (11) und einem konzentrisch zu dem Innenleiter angeordneten zylindrischen Hüllrohr-Anschlussbereich (12), wobei der Innenleiter (11) ein inneres Leiterrohr (11a) und ein äußeres Leiterrohr (11b) aufweist, **dadurch gekennzeichnet**, das innere (11a) und das äußere Leiterrohr (11b) des Innenleiters jeweils in Querrichtung getrennt und kreuzweise miteinander verbunden sind, sodass die Strombahnen in Längsrichtung des Innenleiters (11) wenigstens einmal zwischen dem äußeren Leiterrohr (11b) und dem inneren Leiterrohr (11a) wechseln.

2. Generatorableitung nach Anspruch 1, bei der das innere und das äußere Leiterrohr (11a, 11b) aus Aluminium gefertigt sind.

3. Generatorableitung nach Anspruch 1 oder 2, bei der die Strombahnen in Längsachsenrichtung des Innenleiters (11) einmal an einer Mittelposition in Längsrichtung des Innenleiters zwischen dem äußeren Leiterrohr (11b) und dem inneren Leiterrohr (11a) wechseln.

4. Generatorableitung nach einem der Ansprüche 1 bis 3, bei der das innere Leiterrohr (11a) und das äußere Leiterrohr (11b) des Innenleiters (11) konzentrisch angeordnet sind.

5. Generatorableitung nach einem der Ansprüche 1 bis 4, bei der die Generatorableitung (10) in einem Generator-anschlussbereich im Generatorfundament (14) angeordnet ist.

## Claims

1. Generator output line (10) for electrically connecting a generator to a transformer, having a cylindrical inner conductor (11) and a cylindrical cladding tube connection region (12) which is arranged concentrically with respect to the inner conductor, wherein the inner conductor (11) has an internal conductor tube (11a) and an external conductor tube (11b), **characterized in that** the internal (11a) and external (11b) conductor tubes of the inner conductor are separated in each case in the transverse direction and connected to one another, crossed over, such that the current paths in the longitudinal direction of the inner conductor (11) change at least once between the external conductor tube (11b) and the internal conductor tube (11a).

2. Generator output line according to Claim 1, in which the internal and external conductor tubes (11a, 11b) are produced from aluminum.

3. Generator output line according to Claim 1 or 2, in which the current paths in the direct-axis direction of the inner conductor (11) change once, at a central position in the longitudinal direction of the inner conductor, between the external conductor tube (11b) and the internal conductor tube (11a) .

4. Generator output line according to one of Claims 1 to 3, in which the internal conductor tube (11a) and the external conductor tube (11b) of the inner conductor (11) are arranged concentrically.

5. Generator output line according to one of Claims 1 to 4, in which the generator output line (10) is arranged in a generator connection region in the generator base (14).

## Revendications

1. Raccordement (10) de générateur pour la liaison électrique entre un générateur et un transformateur, comprenant un conducteur (11) intérieur cylindrique et une partie (12) de raccordement à tuyau de gainage cylindrique montée concentriquement au conducteur intérieur, le conducteur (11) intérieur ayant un tuyau (11a) intérieur et un tuyau (11b ) extérieur, **caractérisé en ce que** le tuyau (11a) intérieur et le tuyau (11b) extérieur du conducteur intérieur sont séparés respectivement dans la direction transversale et sont reliés entre eux en croix, de sorte que les voies de courant dans la direction longitudinale du conducteur (11) intérieur alternent au moins une fois entre le tuyau (11b ) extérieur et le tuyau (11a) intérieur du conducteur.

2. Raccordement de générateur suivant la revendication 1, dans lequel le tuyau (11a) intérieur et le tuyau (11b) extérieur du conducteur sont en aluminium.

3. Raccordement de générateur suivant la revendication 1 ou 2, dans lequel les voies de courant dans la direction de l'axe longitudinal du conducteur (11) intérieur alternent une fois en la position médiane dans la direction longitudinale du conducteur intérieur entre le tuyau (11b) extérieur et le tuyau (11a) intérieur du conducteur.

4. Raccordement de générateur suivant l'une des revendications 1 à 3, dans lequel le tuyau (11a) intérieur et le tuyau (11b ) extérieur du conducteur (11) intérieur sont disposés concentriquement.

5. Raccordement de générateur suivant l'une des revendications 1 à 4, dans lequel le raccordement (10 ) de générateur est disposé dans un région de raccordement du générateur dans la fondation (14) du générateur.
